# EUROPEAN PATENT SPECIFICATION

(11) **EP 1 398 351 B1**
(45) Date of publication and mention of the grant of the patent: **06.06.2007**
(21) Application number: 03077924.3
(22) Date of filing: 16.09.2003
(51) Int. Cl.: C08L 95/00, C08J 9/12

(54) **Process for preparing foamed-asphalt aggregates**
Verfahren zur Herstellung von Aggregaten aus Schaumbitumen
Procédé de préparation d'aggrégats à partir d'asphalte expansé

(30) Priority: 16.09.2002 EP 02292257
(43) Date of publication of application: 17.03.2004
(73) Proprietor: SHELL INTERNATIONALE RESEARCH MAATSCHAPPIJ B.V., 2596 HR Den Haag (NL)
(72) Inventor: Cerino, Pierre-Jean, 92507 Rueil Malmaison (FR); Koenders, Burgardus Gijsbertus, 76650 Petit Couronne (FR)

(56) References cited:
- WO-A-01/48089
- WO-A-87/02694

## Description

The present invention relates to a process for preparing an asphalt composition.

### Background of the invention

Mixtures of bitumen and aggregate, commonly known as asphalt, are used in a wide variety of civil engineering applications, for example as roofing materials and in the construction and maintenance of roads. The bitumen acts as a binder, coating individual aggregate particles and binding them together in the final composition. Asphalt compositions are generally prepared by mixing aggregate heated to a temperature in excess of 140°C with hot bitumen, and then applying the asphalt composition as a road or to a roof etc. However, such hot methods of asphalt preparation suffer from some disadvantages, not least that heating both the bitumen and aggregate to high temperature is energy consuming.

For this reason, much effort has been directed towards developing methods of preparing asphalt compositions using aggregates at ambient temperature (`cold' mixtures) or at intermediate temperatures, i.e. temperatures in the range of from 40 to 130 °C (`warm' mixtures). The aim is to reduce asphalt production temperatures without compromising the performance or quality of the asphalt. Such methods attract interest because of their potential energy savings, ease of operation, and health, safety and environmental considerations.

Bitumen emulsions are two phase systems wherein bitumen is dispersed throughout a continuous water phase in the form of discrete globules which are formed and held in suspension by use of an emulsifier. The relatively low viscosity of bitumen emulsions allows them to be applied at lower temperatures than non-emulsified bitumen. When mixed with aggregate, the emulsion 'breaks' and the bitumen and water separate, the liberated bitumen adhering to the aggregate and the water evaporating. Bitumen emulsions may contain agents to accelerate the breaking process and/or improve the adhesion of the bitumen component to the aggregate. Examples of such agents include adhesion promoters of the diamine, polyamine, amidoamine or imidazoline type and polymerised fatty acids, which are described in EP-A 416682 as improving a bitumen emulsions breaking behaviour and the bitumen components adhesivity.

An alternative approach to preparing asphalt compositions at reduced temperature is to use a foamed bitumen binder US 4,348,237 describes an additive composition for the preparation of formed bitumens which is comprised of a metal stearate and a carrier oil. Foamed bitumen is obtainable by injecting a foaming agent such as water into heated bitumen. On contact with the hot bitumen, the foaming agent vaporises, causing the bitumen to expand and foam. The foamed bitumen is then mixed with aggregate to form asphalt. This may be performed as either a batch or a continuous process.

Using foamed bitumen is advantageous as foaming bitumen temporarily increases its volume and lowers its viscosity, allowing the bitumen to be more readily mixed with, and evenly distributed on, the aggregate, and thus allowing either `cold' or 'warm' aggregates to be used in place of the hot aggregates employed in conventional asphalt production.

Unfortunately, not all types of bitumen are suitable for use as foamed bitumen, the effectiveness of a particular bitumen being dependent upon the amount the bitumen expands during foaming and the length of time the bitumen remains as a foam before it contracts. Therefore, it would be advantageous if there was a means by which the foaming properties of bitumen could be improved.

### Statement of the invention

It has now surprisingly been found that foaming properties may be improved by incorporating a polymerised fatty acid additive into bitumen.

Accordingly, the present invention provides a process for preparing an asphalt composition, which process comprises heating a bitumen composition to a temperature in the range of from 110 to 200°C, contacting the bitumen composition with a foaming agent to give a foamed bitumen, and mixing the foamed bitumen with aggregate, in which process the bitumen composition comprises a bitumen component and at least one polymerised fatty acid.

### Detailed description of the invention

In the process of the present invention, the bitumen composition preferably comprises in the range of from 0.1 % to 3.0 % wt, more preferably 0.1 to 2.0 % wt, even more preferably 0.5 to 1.5 % wt, and most preferably 0.75 to 1.25 % wt of the at least one polymerised fatty acid.

Polymerised fatty acids, particularly dimer and trimer acids, typically contain alkyl chains of greater than 4 carbon atoms, preferably at least 7 carbon atoms, and may be obtained by polymerisation of unsaturated fatty acids such as tall oil fatty acids and linoleic acid. Dimer and trimer polymerised fatty acids may also be prepared by plasma polymerisation, for example by the method described in EP-A 346999.

Preferably, the bitumen compositions of the present invention comprise at least one polymerised fatty acid selected from dimers and trimers of an unsaturated fatty acid, more preferably from dimers and trimers of an unsaturated C₁₂₋₂₄ fatty acid. Most preferably, the at least one polymerised fatty acid comprises at least one acid selected from dimers and trimers of an unsaturated C₁₈ fatty acid. Dimer acids, (fatty acids C₁₈-unsaturated dimers) are known and are assigned Chemistry Abstracts Registry Number CAS/61788-89-4. Trimer acids (fatty acids C₁₈-unsaturated trimers) are also known (CAS/68937-90-6). Such polymerised fatty acids are described in Kirk-Otmer. Encyclopedia of Chemical Technology. Vol 7, pages 768 to 782, 3^{rd} Ed, and examples of preferred polymerised fatty acids are available under the trade name "PRIPOL" from Uniqema.

Where the bitumen composition of the present invention comprises at least one polymerised fatty acid selected from dimers and trimers of an unsaturated fatty acid, it is preferred that the w/w ratio of dimer acid to trimer acid is in the range of from 5:1 to 1:2.

In a preferred embodiment of the present invention, the w/w ratio of dimer acid to trimer acid is in the range of from 2:1 to 1:2, and in a particularly preferred aspect of this embodiment the w/w ratio of dimer acid to trimer acid is in the range of from 3:2 to 2:3. An example of a preferred polymerised fatty acid according to this embodiment is obtainable under the trade name "PRIPOL 1045", from Uniqema.

In another preferred embodiment of the present invention, the w/w ratio of dimer acid to trimer acid is in the range of from 5:1 to 3:1. An example of a preferred polymerised fatty acid according to this embodiment is obtainable under the trade name "PRIPOL 1017", from Uniqema.

The bitumen component employed in the present invention may be a residue from the distillation of crude oil, a cracked residue, naturally occurring bitumen or a blend of various bitumen types. Examples of bitumen that may be conveniently used in the present invention include distillation or "straight run" bitumen, precipitation bitumen, e.g. propane bitumen, oxidised or blown bitumen, or mixtures thereof. Other bitumen that may be used include mixtures of one or more of these bitumen with extenders such as petroleum extracts, distillates or residues, and oils.

The present invention is especially advantageous when used with non-naphthenic bitumen. By non-naphthenic bitumen it is meant bitumen having a total acid number of less than 1 mg KOH/g, more preferably less than 0.1 mg KOH/g. Such bitumen is known in the art as paraffinic bitumen.

The penetration of the bitumen component used in the present invention may vary widely depending on the type of application in which the asphalt composition is to be used. In general, the penetration will conveniently be in the range of from 40 to 200 dmm, more conveniently 50 to 100 dmm (measured according to EN 1426). However, when for example the asphalt composition is to be used for road applications in cold climates, bitumen having a penetration of up to 430 dmm may be used. Alternatively, when the foamed binder of the present invention is to be used as a hard binder component, for example as described in the process of WO 01/62852, the bitumen component may have a penetration as low as 10 dmm.

Similarly to penetration, the softening point of the bitumen component may vary widely. Conveniently, the softening point may be in the range of from 35 to 130 °C, more conveniently 40 to 70 °C (measured according to EN 1427).

According to the process of the present invention, the bitumen composition may additionally comprise other additive types known to be useful in asphalt compositions. Examples include polymers, e.g. ethylene vinyl acetate copolymer (EVA), polyolefins and conjugated diene rubbers and styrenic block copolymers such as styrene-butadiene-styrene and styrene-isoprene-styrene block copolymers; waxy additives such as Fischer-Tropsch waxes and ethylene bis-stearamide; and adhesion improvers such as alkylamidoamine additives as, for example, obtainable from Akzo Nobel under the trade name WETFIX I".

In the process of the present invention, the bitumen composition is contacted with a foaming agent in order to cause the bitumen to foam. The foaming agent may be any material, or mixture of materials, that cause the heated bitumen composition to foam. However, it is preferred that the foaming agent is a liquid that has the ability to generate a high ratio of vapour to the original liquid when heated above its boiling point. Whilst the foaming agent may be an alcohol, such as ethanol or n- or isopropanol, it is most preferred to use water as the foaming agent as it is less expensive and more safe.

It is generally not necessary for the foaming agent to be either heated or cooled before contact with the bitumen composition, and when the foaming agent is water its temperature may conveniently be in range of from 5 to 30 °C.

Preferably, the bitumen component is heated to a temperature in the range of from 120 to 190 °C, more preferably in the range of from 150 to 180 °C, before being contacted with the foaming agent.

The amount of foaming agent used is not critical, provided it is sufficient to induce the bitumen composition to foam. However, the amount of foaming agent may conveniently be in the range of from 0.5 to 20 parts by weight, per 100 parts of bitumen composition, more preferably in the range of from 1 to 10 parts, and most preferably in the range of from 1 to 5 parts.

In the present invention, the bitumen composition and foaming agent may be contacted by any practical means so long as the contact causes the bitumen to foam. Methods by which a heated bitumen composition may be contacted with a foaming agent to foam bitumen are known in the art. Examples of convenient foaming methods are described in Australian patent 433003 and US5788755.

In a preferred embodiment, the bitumen composition and foaming agent may be conveniently contacted by simultaneously injecting the bitumen composition and the foaming agent into an expansion chamber. In addition to the foaming agent, a gas (e.g. air) may also be injected at the same time as the foaming agent to facilitate foaming.

In the present invention, once the bitumen composition has been foamed it is mixed with aggregate to form an asphalt composition. This is done before the bitumen foam contracts. Means of mixing foamed bitumen and aggregate are well known in the art.

The process of the present invention may conveniently be used to prepare asphalt compositions for a wide range of uses including paving applications, as mastic asphalt, and in industrial applications. However, the present invention is particularly suited to the preparation of roads, airfield surfaces and car parks etc. Therefore, a preferred use of the present invention is in the preparation of asphalt for paving applications.

As will be understood by those skilled in the art a wide range of aggregate types and size distributions may be employed in the process of the present invention, the type and mix of aggregate varying with the application for which the asphalt is to be used. However, when the asphalt composition is for use in paving applications it is preferred that the aggregate comprises a mixture of filler (particles having a particle size of less than 63 micrometers); sand (particles having a particle size in the range of from 63 micrometers to 2mm); and stones (particles size of greater than 2 mm, preferably in the range of from 2mm to 22mm) .

The amount of bitumen composition in the asphalt compositions of the present invention will also vary depending on the application for which the asphalt is to be used, however, the asphalt compositions of the present invention preferably comprise in the range of from 1 to 20 % wt of bitumen composition, more preferably in the range of from 2 to 10 % wt, based on total asphalt composition.

It is an attractive feature of the present invention that asphalt compositions may be readily prepared without the use of very hot aggregate. Accordingly, in a preferred embodiment of the present invention the asphalt composition prepared is a cold mixture, wherein the foamed bitumen is mixed with unheated aggregate (i.e. aggregate having a temperature in the range of from 5 to 30 °C). In a further preferred embodiment, the asphalt composition prepared is a warm mixture, wherein the foamed bitumen is mixed with aggregate that has been heated to a temperature in the range of from 31 to 130 °C, preferably 40 to 100 °C.

The process of the present invention may be operated in either a batch or a continuous fashion.

The present invention further provides for the use of at least one polymerized fatty acid as a bitumen foam enhancing additive.

The present invention will be further understood from the following illustrative examples.

In the following examples, samples of bitumen were tested using laboratory foaming equipment. The samples tested were as follows:-
Example 1 (According to the Invention): A bitumen composition comprising a 70/100 grade paraffinic bitumen and 1 %wt, based on total composition, of a polymerised C₁₈ fatty acid obtainable from Uniqema, under the designation "PRIPOL 1045". The polymerised fatty acid had an acid number (mg KOH/g) of from 184-191, a dimer content of from 39 to 41 %, and a trimer content of from 48 to 54 %, as determined by Gas chromatography (GC). The paraffinic bitumen had an acid number of 0.0 (mg KOH/g).
Example A (Comparative): The 70/100 grade paraffinic bitumen of Example 1, containing no polymerised fatty acid additive.
Example B (Comparative): A 70/100 grade naphthenic bitumen known to have good foaming properties and having an acid number of 4.3 (mg KOH/g).

The foaming properties of the bitumen were tested using a "Foamlab" apparatus obtainable from Societe Auxiliaire Enterprise ("Foamlab" is a tradename).

In this test a sample of bitumen is placed in a heated vessel and heated to a required temperature. During heating the bitumen is circulated by means of pumping apparatus. Once the bitumen is at the correct temperature it is injected into an expansion chamber over a controlled injection period. Simultaneously to the bitumen injection, an amount of water is injected into the chamber from a separate vessel causing the bitumen to foam. Optionally, air or gas may also be injected into the chamber during bitumen injection.

During the foaming process the expansion ratio maximum (ERM) and the half-life of the foamed bitumen (T½) are measured. The expansion ratio maximum (ERM) is the ratio of the maximum volume of the foamed bitumen to the volume of the bitumen injected. The half-life (T½) of the foamed bitumen is a measure of how long the bitumen remains as a foam before it contracts, and is the time period in which the foamed bitumen decreases from its maximum volume to half the maximum volume. These properties were measured by video recording the injection, expansion and subsequent contraction of the bitumen and use of an appropriately positioned graduated measuring indicator. From analysis of the video recording the maximum volume of expansion and the half-life (T½) of the foamed bitumen were determined.

The foaming properties of the bitumen of Example 1 and Comparative Examples A and B are shown in Table 1. The foaming experiments were performed with a bitumen injection period of 5 seconds and at a water pressure of 4.5 bars (450 kPa).

From Table 1 it can be seen that under analogous conditions the bitumen of Example 1, comprising a polymerised fatty acid additive, has both a greater expansion ratio maximum (ERM) and a greater half-life (T½) than the bitumen of Comparative Example A, which is the same bitumen containing no polymerised fatty acid additive. Further, the bitumen of Example 1 even displays better foaming properties than the naphthenic bitumen (Comparative Example B), which is considered to have good foaming properties.

**TABLE 1**

| Example | Bitumen Properties | | | Foaming Conditions | | | |
|---|---|---|---|---|---|---|---|
| | Pen (dmm)ⁱ⁾ | Softening Point ⁱⁱ⁾ (°C) | Dynamicⁱⁱⁱ⁾ Viscosity mPa.s | Water ^{iv)} | Bitumen Temp. (°C) | ERM | T½ (secs) |
| 1 | | | | 2.9 | 160 | 9.7 | 30.0 |
| | 82 | 46.5 | 202 | 5.0 | 160 | 15.6 | 20.0 |
| | | | | 8.0 | 160 | 23.0 | 14.5 |
| A (Paraffinic) | | | | 3.1 | 160 | 6.0 | 16.0 |
| | 88 | 45.8 | 180 | 5.2 | 160 | 9.1 | 11.0 |
| | | | | 8.5 | 160 | 12.0 | 11.0 |
| B (Naphthenic) | | | | 3.1 | 160 | 8.8 | 10.0 |
| | 89 | 44.8 | 162 | 5.0 | 160 | 13.5 | 12.0 |
| | | | | 8.0 | 160 | 20.5 | 6.0 |

| | | | | | | | |
|---|---|---|---|---|---|---|---|
| i) Penetration at 25 °C measured according to EN 1426 ii) Softening Point measured according to EN 1427 iii) Dynamic viscosity at 150 °C and a shear rate of 100s⁻¹ as measured with a "Haake RT20 Rotovisco" iv) Parts per 100 parts (by weight) of bitumen composition | | | | | | | |

## Claims

1. A process for preparing an asphalt composition, which process comprises heating a bitumen composition to a temperature in the range of from 110 to 200°C, contacting the bitumen composition with a foaming agent to give a foamed bitumen, and mixing the foamed bitumen with aggregate, in which process the bitumen composition comprises a bitumen component and at least one polymerised fatty acid.

2. A process as claimed in claim 1, in which process the bitumen composition comprises in the range of from 0.1 to 3% wt of the at least one polymerised fatty acid, based on total bitumen composition.

3. A process as claimed in claim 2, in which process the bitumen composition comprises in the range of from 0.75 to 1.25% wt of the at least one polymerised fatty acid, based on total bitumen composition.

4. A process as claimed in any one of claims 1 to 3, in which process the amount of foaming agent is in the range of from 1 to 10 parts per 100 parts of bitumen composition.

5. A process as claimed in any one of claims 1 to 4, in which process the bitumen component has a total acid number of less than 1 mg KOH/g.

6. A process as claimed in any one of claims 1 to 5, in which process the foaming agent is water.

7. A process as claimed in any one of claims 1 to 6, in which process the at least one polymerised fatty acid comprises at least one acid selected from dimers and trimers of an unsaturated C₁₂₋₂₄ fatty acid.

8. A process as claimed in claim 7, in which process the at least one polymerised fatty acid comprises at least one acid selected from dimers and trimers of an unsaturated C₁₈ fatty acid.

9. A process as claimed in any one of claims 1 to 8, in which process the w/w ratio of dimer acid to trimer acid in the at least one polymerised fatty acid is in the range of from 2:1 to 1:2.

10. Use of at least one polymerised fatty acid as a bitumen foam enhancing additive.

## Patentansprüche

1. Verfahren zur Herstellung einer Asphaltzusammensetzung, welches Verfahren das Erhitzen einer Bitumenzusammensetzung auf eine Temperatur im Bereich von 110 bis 200°C, das Inkontaktbringen der Bitumenzusammensetzung mit einem Schäumungsmittel, um geschäumtes Bitumen zu ergeben, und das Mischen des geschäumten Bitumens mit Aggregat umfaßt, in welchem Verfahren die Bitumenzusammensetzung eine Bitumenkomponente und mindestens eine polymerisierte Fettsäure umfaßt.

2. Verfahren nach Anspruch 1, in welchem Verfahren die Bitumenzusammensetzung im Bereich von 0,1 bis 3 Gew.-% der mindestens einen polymerisierten Fettsäure, bezogen auf die gesamte Bitumenzusammensetzung, umfaßt.

3. Verfahren nach Anspruch 2, in welchem Verfahren die Bitumenzusammensetzung im Bereich von 0,75 bis 1,25 Gew.-% der mindestens einen polymerisierten Fettsäure, bezogen auf die gesamte Bitumenzusammensetzung, umfaßt.

4. Verfahren nach einem der Ansprüche 1 bis 3, in welchem Verfahren die Menge an Schäumungsmittel im Bereich von 1 bis 10 Teile pro 100 Teile der Bitumenzusammensetzung beträgt.

5. Verfahren nach einem der Ansprüche 1 bis 4, in welchem Verfahren die Bitumenkomponente eine Gesamtsäurezahl von weniger als 1 mg KOH/g besitzt.

6. Verfahren nach einem der Ansprüche 1 bis 5, in welchem Verfahren das Schäumungsmittel Wasser ist.

7. Verfahren nach einem der Ansprüche 1 bis 6, in welchem Verfahren die mindestens eine polymerisierte Fettsäure wenigstens eine Säure, ausgewählt aus den Dimeren und den Trimeren einer ungesättigten C₁₂₋₂₄-Fettsäure, umfaßt.

8. Verfahren nach Anspruch 7, in welchem Verfahren die mindestens eine polymerisierte Fettsäure wenigstens eine Säure, ausgewählt aus den Dimeren und den Trimeren einer ungesättigten C₁₈-Fettsäure, umfaßt.

9. Verfahren nach einem der Ansprüche 1 bis 8, in welchem Verfahren das Gewichtsverhältnis von Dimer-Säure zu Trimer-Säure in der mindestens einen polymerisierten Fettsäure im Bereich von 2:1 bis 1:2 liegt.

10. Verwendung von mindestens einer polymerisierten Fettsäure als ein Bitumenschaum-verbesserndes Additiv.

## Revendications

1. Procédé de préparation d'une composition d'asphalte, lequel procédé comprend le chauffage d'une composition de bitume à une température allant de 110 à 200°C, la mise en contact de la composition de bitume avec un agent moussant pour donner un bitume en mousse, et le mélange du bitume en mousse avec un agrégat, procédé dans lequel la composition de bitume comprend un composant de bitume et au moins un acide gras polymérisé.

2. Procédé suivant la revendication 1, procédé dans lequel la composition de bitume comprend de 0,1 à 3 % en poids d'au moins l'acide gras polymérisé, par rapport à la composition de bitume totale.

3. Procédé suivant la revendication 2, procédé dans lequel la composition de bitume comprend de 0,75 à 1,25 % en poids d'au moins l'acide gras polymérisé, par rapport à la composition de bitume totale.

4. Procédé suivant l'une quelconque des revendications 1 à 3, procédé dans lequel la quantité d'agent moussant va de 1 à 10 parties pour 100 parties de composition de bitume.

5. Procédé suivant l'une quelconque des revendications 1 à 4, procédé dans lequel le composant de bitume a un indice d'acide total de moins de 1 mg de KOH/g.

6. Procédé suivant l'une quelconque des revendications 1 à 5, procédé dans lequel l'agent moussant est de l'eau.

7. Procédé suivant l'une quelconque des revendications 1 à 6, procédé dans lequel au moins l'acide gras polymérisé comprend au moins un acide choisi parmi les dimères et trimères d'un acide gras en C₁₂₋₂₄ insaturé.

8. Procédé suivant la revendication 7, procédé dans lequel au moins l'acide gras polymérisé comprend au moins un acide choisi parmi les dimères et trimères d'un acide gras en C₁₈ insaturé.

9. Procédé suivant l'une quelconque des revendications 1 à 8, procédé dans lequel le rapport en poids/poids de l'acide dimère à l'acide trimère dans au moins l'acide gras polymérisé se situe dans la plage de 2/1 à 1/2.

10. Utilisation d'au moins un acide gras polymérisé comme additif améliorant une mousse de bitume.
